# EUROPÄISCHE PATENTANMELDUNG

(11) **EP 4 636 396 A1**
(43) Veröffentlichungstag der Anmeldung: **22.10.2025**
(21) Anmeldenummer: 25162521.6
(22) Anmeldetag: 10.03.2025
(51) Int. Cl.: G01N 27/904, G01N 27/22, G01B 7/06

(54) **MESSYSTEM UND VERFAHREN ZUR CHARAKTERISIERUNG EINER MEHRSCHICHTIGEN STRUKTUR MIT SCHICHTEN UNTERSCHIEDLICHER OHMISCHER EIGENSCHAFTEN**

(30) Priorität: 16.04.2024 DE 102024110653
(71) Anmelder: Namisens GmbH, 77815 Bühl (DE)
(72) Erfinder: Czempas, Dominic, 76133 Karlsruhe (DE)
(74) Vertreter: LBP Lemcke, Brommer & Partner Patentanwälte mbB

(57) **Zusammenfassung**

Messsystem (1) zur Charakterisierung einer mehrschichtigen Struktur mit schichtweise unterschiedlichen ohmschen Eigenschaften, insbesondere einer Batterieelektrode (B),
mit einem Sensormodul (2), einer elektrischen Schaltvorrichtung (3) und einer Messelektronik, wobei das Sensormodul (2) mehr als zwei Planarspulen (4, 5, 6, 7, 8) umfasst, die in einem Spulenstapel angeordnet sind und wobei die elektrische Schaltvorrichtung (3) mit den Planarspulen (4, 5, 6, 7, 8) kontaktiert ist und dafür eingerichtet ist, die Planarspulen (4, 5, 6, 7, 8) derart mit der Messelektronik zu verbinden, dass die Planarspulen (4, 5, 6, 7, 8) zwischen zumindest einer Messkonfiguration und einer Referenzkonfiguration umschaltbar sind, wobei in der Messkonfiguration die Planarspulen (4, 5, 6, 7, 8) zumindest teilweise einen wahlweise induktiven oder kapazitiven Messsensor ausbilden, dessen Erfassungsbereich, sich außerhalb des Sensormoduls (2) erstreckt, um eine Eigenschaft einer niederohmigen Schicht (N) und/oder hochohmigen Schicht (H) der Struktur zu bestimmen und in der Referenzkonfiguration die Planarspulen (4, 5, 6, 7, 8) zumindest teilweise einen wahlweise induktiven oder kapazitiven Referenzsensor ausbilden, dessen Erfassungsbereich sich im Wesentlichen innerhalb des Sensormoduls (2) erstreckt, um eine Sensormoduleigenschaft zu bestimmen.

## Beschreibung

Die Erfindung betrifft ein Messsystem sowie ein Verfahren zur Charakterisierung einer mehrschichtigen Struktur mit schichtweise unterschiedlichen ohmschen Eigenschaften. Die Erfindung betrifft auch ein Sensormodul für ein Messsystem sowie eine Fertigungsanlage zur Herstellung einer mehrschichtigen Struktur mit schichtweise unterschiedlichen ohmschen Eigenschaften.

Mehrschichtige Strukturen mit unterschiedlichen ohmschen Eigenschaften finden in verschiedenen Branchen Anwendung. In der Automobilindustrie können sie beispielsweise als Batterieelektroden vorliegen, bei denen jeweils eine Metallschicht, die typischerweise durch eine Kupfer- oder Aluminiumfolie gebildet ist, mit einer graphithaltigen Schicht versehen ist. Die Metallschicht weist dabei einen niedrigeren ohmschen Widerstand auf, als die graphithaltige Schicht. Die Metallschicht kann also als niederohmige Schicht und die graphithaltige Schicht als hochohmige Schicht angesehen werden.

Um am obigen Beispiel der Batterieelektrode eine gute Funktionsfähigkeit der mehrschichtigen Struktur zu ermöglichen, muss sichergestellt werden, dass insbesondere die oben genannten Bestandteile die erforderlichen Eigenschaften aufweisen. Hierfür sind Qualitätssicherungsmaßnahmen erforderlich, mit denen die genannten Eigenschaften bestimmt werden können und um anschließend gegebenenfalls einen Prozessparameter eines Fertigungsprozesses in der Herstellung der mehrschichtigen Struktur anzupassen oder eine geprüfte Struktur im Falle unzureichender Qualität von der Weiterverarbeitung oder Auslieferung auszuschließen. Insbesondere ist es gewünscht, die Charakterisierung der mehrschichtigen Struktur nicht nur punktuell, sondern idealerweise vollflächig vornehmen zu können. Besonders relevant sind hierbei die Eigenschaften der hochohmigen Schicht, welche üblicherweise auf der niederohmigen Schicht aufgebracht ist und dabei in einer gewünschten Schichtdicke und Schichtdichte vorliegen muss.

Eine Möglichkeit, um eine zerstörungsfreie Charakterisierung der mehrschichtigen Struktur vornehmen zu können, bieten Messsysteme auf Grundlage der Röntgentechnik. Hierbei ist es in Abhängigkeit des Durchstrahlungs- oder Brechungsverhaltens von Röntgenstrahlen, mit denen die mehrschichtige Struktur beaufschlagt wird, möglich, auf die Schichteigenschaften zu schließen. Nachteilig ist allerdings, dass derartige Messsysteme technisch sehr komplex und anfällig für Einflüsse aus der Fertigungsumgebung sind.

Eine andere Möglichkeit bieten optische Messsysteme, von denen sich insbesondere solche in der industriellen Messtechnik etabliert haben, die nach dem Konfokalprinzip arbeiten. Zwar weisen solche optische Messsysteme eine hohe Genauigkeit auf, allerdings sind mit ihnen nur punktuell Informationen über die Oberfläche einer optisch sichtbaren Schicht der zu charakterisierenden Struktur erfassbar. Zwar ist es möglich, ein solches optisches Messsystem mittels eines Manipulators gegenüber der mehrschichtigen Struktur, wie zum Beispiel eine Batterieelektrode, zu verstellen. Allerdings ist auch hierbei trotz des hohen technischen Aufwandes keine vollflächige Prüfung der Struktur möglich, insbesondere wenn die zu charakterisierende Struktur sich in Bewegung befindet, wie es zum Beispiel bei der Beschichtung von Batterieelektroden üblich ist.

Darüber hinaus können die mehrschichtigen Strukturen auch relevante Eigenschaften aufweisen, die prinzipbedingt weder röntgentechnisch noch optisch erfassbar sind. Am Beispiel der Batterieelektrode kann es sich um die elektrischen Eigenschaften der hochohmigen graphithaltigen Schicht handeln, welche sich insbesondere nach dem sogenannten Kalandrierprozess innerhalb vorgegebener Toleranzgrenzen bewegen sollten, damit die gewünschte Qualität der mehrschichtigen Struktur erreicht werden kann. Die elektrischen Eigenschaften sind hierbei nicht nur von der Schichtdicke, sondern zudem von der Schichtdichte abhängig.

Zusammenfassend sind die in Frage kommenden Messsysteme zur Charakterisierung mehrschichtiger Strukturen mit unterschiedlichen ohmschen Eigenschaften entweder nur mit hohem Aufwand in Fertigungsprozesse integrierbar oder bieten nur unzureichende Informationen über die zu charakterisierende Struktur. Ein hoher Integrationsaufwand bedeutet an dieser Stelle insbesondere, dass die oben genannten Messmethoden und/oder Messsysteme jeweils zu zwei Seiten der zu prüfenden Struktur durchgeführt bzw. installiert werden müssen, beispielsweise also über und unter einer zu messenden Elektrode. Außerdem sind die in Frage kommenden Messsysteme prinzipbedingt auf Messgrößen beschränkt, die eine umfassende Charakterisierung mehrschichtiger Strukturen nicht ermöglichen

Es somit die Aufgabe der Erfindung, Mittel zur Charakterisierung mehrschichtiger Strukturen mit unterschiedlichen ohmschen Eigenschaften vorzuschlagen, die mit einer dauerhaft hohen Genauigkeit einhergehen, mit geringem Aufwand in die Herstellung derartiger Strukturen, insbesondere Batterieelektroden, integrierbar ist und einen umfassenden Rückschluss auf die Schichteigenschaften ermöglichen.

Die Aufgabe wird gelöst mittels eines Messsystems nach Anspruch 1, einem Sensormodul nach Anspruch 14, einer Fertigungsanlage nach Anspruch 15 sowie einem Verfahren nach Anspruch 16. Vorteilhafte Weiterbildungen sind Gegenstände abhängiger Unteransprüche.

Das erfindungsgemäße Messsystem ist zur Charakterisierung einer mehrschichtigen Struktur mit schichtweise unterschiedlichen ohmschen Eigenschaften geeignet. Insbesondere kann es sich bei der Struktur um eine Batterieelektrode handeln. Das Messsystem weist ein Sensormodul, eine elektrische Schaltvorrichtung sowie eine Messelektronik auf. Das Sensormodul umfasst mehr als zwei Planarspulen, die in einem Spulenstapel angeordnet sind. Die elektrische Schaltvorrichtung ist mit den Planarspulen kontaktiert und dafür eingerichtet, die Planarspulen derart mit der Messelektronik zu verbinden, dass die Planarspulen zwischen zumindest einer Messkonfiguration und einer Referenzkonfiguration umschaltbar sind. In der Messkonfiguration bilden die Planarspulen zumindest teilweise einen wahlweise induktiven oder kapazitiven Messsensor aus, dessen Erfassungsbereich, sich außerhalb des Sensormoduls erstreckt, um eine Eigenschaft einer niederohmigen und/oder hochohmigen Schicht der Struktur zu bestimmen. In der Referenzkonfiguration bilden die Planarspulen zumindest teilweise einen wahlweise induktiven oder kapazitiven Referenzsensor aus, dessen Erfassungsbereich sich im Wesentlichen innerhalb des Sensormoduls erstreckt, um eine Sensormoduleigenschaft zu bestimmen.

Eine Erkenntnis, auf der die Erfindung beruht, besteht darin, dass die Verwendung von Planarspulen es zum einen ermöglicht, einen elektromagnetischen Sensor auszubilden, der sowohl als induktiver als auch kapazitiver Sensor betrieben werden kann, um eine mehrschichtige Struktur mit schichtweise unterschiedlichen ohmschen Eigenschaften umfassend charakterisieren zu können, wobei dieser zu nur einer Seite der Struktur angeordnet sein kann. Wie weiter unten noch im Detail erläutert ist, ist insbesondere eine Schichtdicke der hochohmigen Schicht hochgenau ermittelbar. Des Weiteren ermöglicht der Einsatz von Planarspulen eine Wirkrichtungsumkehr eines derartigen elektromagnetischen Sensors, sodass sein induktives oder kapazitives Wirkprinzip auch zur Ermittlung einer Sensormoduleigenschaft dienen kann. Dadurch lässt sich bedarfsweise die Genauigkeit bei der Ermittlung der Schichteigenschaften, insbesondere der Schichtdicke der hochohmigen Schicht, wesentlich steigern.

Im Rahmen der Erfindung können die Planarspulen jeweils als Sensorelemente mit mehreren Windungen angesehen werden, welche sich jeweils in einer Spulenebene erstrecken. Diese Eigenschaften einer Planarspule ermöglichen es, sie kompakt und flach zu gestalten, was sie besonders geeignet für Anwendungen macht, bei denen der zur Verfügung stehende Bauraum begrenzt ist. Ferner sind die Planarspulen vergleichsweise günstig erhältlich, sodass insbesondere mehrere Sensormodule nach der Art eines Sensorarrays angeordnet sein können, um eine vollflächige Charakterisierung der Struktur zu ermöglichen. Insbesondere ist es denkbar, ein solches Sensorarray oberhalb einer sich bewegenden Struktur, insbesondere einer Batterieelektrode, anzuordnen und das Sensorarray beispielsweise als Linienarray auszubilden, welches sich in einem Abstand quer zu einer Bewegungsrichtung der sich bewegenden Struktur erstreckt. Dadurch kann in der Messkonfiguration eine vollflächige Qualitätsprüfung der Struktur berührungslos vorgenommen werden.

Ein Spulenstapel kann im Rahmen der Erfindung als eine räumliche Anordnung von Planarspulen angesehen werden, bei der mindestens drei Planarspulen in Bezug auf ihre jeweiligen Spulenebenen parallel zueinander angeordnet sind, insbesondere voneinander beabstandet. Insbesondere sind Planarspulen dabei derart angeordnet, dass ihre jeweiligen Windungen oder deren Erstreckungsbereiche sich in einer Blickrichtung orthogonal zu den Spulenebenen überlappen. Insbesondere weisen die Planarspulen jeweils eine Mittelachse auf, welche im Wesentlichen orthogonal zu ihrer jeweiligen Spulenebene verläuft. Vorzugsweise sind die mindestens drei Planarspulen in Bezug auf ihre Mittelachsen koaxial zueinander angeordnet. Insbesondere sind die Planarspulen des Spulenstapels baugleich ausgeführt.

Die Schaltvorrichtung kann im Rahmen der Erfindung als eine elektrische und/oder elektronische Komponente oder eine Anordnung davon angesehen werden, welche mit den Planarspulen, insbesondere mit den Windungsenden der Planarspulen, sowie der Messelektronik elektrisch kontaktiert ist und dazu eingerichtet ist, bedarfsweise eine signal- und/oder energietechnische Verbindung zwischen der Messelektronik und zumindest einem Teil der Planarspulen, insbesondere deren Windungsenden, herzustellen, zu trennen oder zu verändern. Beispielsweise kann die Schaltvorrichtung einen analogen Multiplexer und/oder einen Field Programmable Analog Array umfassen.

Die Messelektronik kann im Rahmen der Erfindung ebenfalls als eine elektrische und/oder elektronische Komponente oder eine Anordnung davon angesehen werden, welche das Sensormodul mit elektrischer Energie und/oder Signalen versorgt, insbesondere damit in der Messkonfiguration ein Messsensor und in der Referenzkonfiguration ein Referenzsensor ausgebildet werden kann. Ferner dient die Messelektronik dazu, die mittels des Sensormoduls erfassbaren elektrischen Mess- und Referenzgrößen zu verarbeiten und ein Messergebnis auszugeben. Insbesondere ist die Messelektronik dazu eingerichtet, eine Schichteigenschaft, insbesondere die Schichtdicke der hochohmigen Schicht, oder eine davon abhängige Messgröße auszugeben.

Die Ausgestaltung der Planarspulen und deren Anordnung in dem Spulenstapel ermöglichen es, die Planarspulen sowohl in der Messkonfiguration als auch in der Referenzkonfiguration als induktive Sensorelemente und/oder als kapazitive Sensorelemente zu betreiben. Insbesondere kann zumindest eine der Planarspulen als Schirmelement ausgebildet sein, um bedarfsweise eine Wirkrichtungsumkehr zwischen der Messkonfiguration und der Referenzkonfiguration zu erzeugen.

Insbesondere sind die Schaltvorrichtung und die Messelektronik zusammenwirkend derart ausgebildet, dass eine oder mehrere Planarspulen des Sensormoduls für die Messkonfiguration jeweils wahlweise als induktive Sendespule, induktive Empfangsspule, kapazitive Messelektrode oder als Schirmelement ausgebildet werden können. Dementsprechend sind die Schaltvorrichtung und die Messelektronik vorzugsweise derart ausgebildet, dass eine oder mehrere Planarspulen des Sensormoduls für die Referenzkonfiguration jeweils wahlweise als induktive Referenzsendespule, induktive Referenzempfangsspule, kapazitive Referenzmesselektrode oder als Schirmelement ausgebildet werden können.

Wie oben erwähnt, bildet das Sensormodul in der Messkonfiguration einen Erfassungsbereich aus, welcher sich außerhalb des Sensormoduls erstreckt. Insbesondere kann der Erfassungsbereich durch ein Magnetfeld und/oder ein elektrisches Feld definiert sein. Bei einer in dem Erfassungsbereich angeordneten mehrschichtigen Struktur dient der Erfassungsbereich dazu, um mit der hochohmigen und/oder niederohmigen Schicht der Struktur in Wechselwirkung zu treten. Die Planarspulen können hierbei mittels der Schaltvorrichtung derart mit der Messelektronik kontaktiert sein, dass ein Teil der Planarspulen mit elektrischer Energie versorgt wird, um als aktives Sensorelement zu dienen und ein anderer Teil der Planarspulen als passives Sensorelement dient, um ein induktives und/oder kapazitives Messsignal zu empfangen.

In der Messkonfiguration, in der das Sensormodul einen induktiven Messsensor ausbildet, ist der Erfassungsbereich insbesondere derart beschaffen, um mit der niederohmigen Schicht der Struktur, insbesondere einer metallischen Schicht einer Batterieelektrode, in Wechselwirkung zu treten. In der Messkonfiguration, in der das Sensormodul einen kapazitiven Messsensor ausbildet, ist der Erfassungsbereich insbesondere derart beschaffen, um mit der hochohmigen Schicht der Struktur in Wechselwirkung zu treten.

Wie oben ebenfalls erwähnt, bildet das Sensormodul in der Referenzkonfiguration ebenfalls einen Erfassungsbereich aus. Dieser kann ebenfalls durch ein Magnetfeld und/oder ein elektrisches Feld definiert sein und erstreckt sich im Wesentlichen in dem Sensormodul. Insbesondere ist in der Referenzkonfiguration mindestens eine der Planarspulen mittels der Schaltvorrichtung derart mit der Messelektronik verbunden, dass sie einen elektrischen Schirm gegenüber der Sensorumgebung ausgebildet. Insbesondere kann es sich hierbei um eine außenliegende Planarspule innerhalb des Spulenstapels handeln. Die übrigen Planarspulen können hierbei mittels der Schaltvorrichtung derart mit der Messelektronik kontaktiert sein, dass ein Teil der Planarspulen mit elektrischer Energie versorgt wird, um als aktives Sensorelement zu dienen und ein anderer Teil der Planarspulen als passives Sensorelement dient, um ein induktives und/oder kapazitives Referenzmesssignal zu empfangen, das einen Rückschluss auf eine Sensormoduleigenschaft ermöglicht.

Im Rahmen der Erfindung oder einer der vorteilhaften Weiterbildungen kann eine das Sensormodul eine oder mehrere außenliegende Planarspulen des Spulenstapels aufweisen und/oder eine oder mehrere innenliegende Planarspulen des Spulenstapels. Eine außenliegende Planarspule kann als oberste oder unterste Planarspule innerhalb eines Spulenstapels angesehen werden. Zusätzlich oder alternativ kann die außenliegende Planarspule am zum äußeren Erfassungsbereich weisenden Ende des Spulenstapels angeordnet sein. Eine innenliegende Planarspule kann demgegenüber an einer dem äußeren Erfassungsbereich abweisenden Seite einer außenliegenden Planarspule angeordnet sein und sich insbesondere zwischen zwei außenliegenden Planarspulen befinden.

Die erfindungsgemäß erreichbare Wirkrichtungsumkehr des Sensormoduls ist insbesondere mit Blick auf die Referenzkonfiguration überraschend, in der die Planarspulen zumindest teilweise einen kapazitiven Referenzsensor ausbilden. Üblicherweise fungieren hochohmige Sensorelemente als Feldleiter und verfälschen kapazitive Messergebnisse. Wie Untersuchungen der Anmelderin jedoch gezeigt haben, ist dieser negative Effekt für eine kapazitive Referenzmessung aufgrund der naturgemäß flachen Bauart von Planarspulen nahezu vernachlässigbar. Dadurch ist es zum Beispiel möglich, anhand einer kapazitiven Referenzmessgröße einen Abstand zwischen zwei außenliegenden Planarspulen des Spulenstapels zu ermitteln. Hierbei handelt es sich um eine Sensormoduleigenschaft, die bei der Ermittlung der Schichteigenschaft berücksichtigt werden kann.

Ein besonderer Vorteil ist mit der Erfindung erreichbar, wenn das Sensormodul nach der Art eines mehrlagigen Printed Circuit Boards ausgebildet ist, bei dem die Planarspulen jeweils von einer im Wesentlichen eben verlaufenden, spiralförmigen Kupferbahn, vorzugsweis mit einer Dicke von maximal 10 Mikrometern, gebildet sind und die Planarspulen paarweise mittels eines elektrisch isolierenden Trägermaterials voneinander getrennt sind.

In der vorstehend beschriebenen vorteilhaften Weiterbildung ist das Sensormodul sowie seine Sensorelemente als Komponenten mit einem hohen Grad an Funktionsintegration ausgebildet. Dies hat zum Nachteil, dass andere Komponenten, etwa Temperatursensoren nicht in das Sensormodul integriert werden können, ohne seine kompakte Bauweise zu verändern. Gleichzeitig ist das Trägermaterial anfällig gegenüber Temperaturschwankungen und Feuchte, wodurch sich seine Abmessungen und damit auch die relative Anordnung der Planarspulen zueinander verändert. Mittels der oben beschriebenen Wirkrichtungsumkehr ist in der Referenzkonfiguration insbesondere jedoch möglich, eine Relativlage zwischen zumindest zwei der mindestens drei Planarspulen zueinander zu ermitteln und für die Auswertung der Messsignale in der Messkonfiguration zu berücksichtigen. Dadurch kann insbesondere ein Sensordrift kompensiert werden, der durch die oben genannten Temperaturschwankungen und Feuchte bedingt sein kann. Der Sensordrift kann hierbei als eine systematische oder zufällige Abweichung einer Messgröße in der Messkonfiguration angesehen werden. Es sind folglich keine weiteren Sensoren, insbesondere Temperatursensoren oder Feuchtesensoren, erforderlich um eine hohe Genauigkeit des Messsystems zu ermöglichen.

In einer vorteilhaften Weiterbildung ist zur Ausbildung des induktiven Messsensors zumindest eine Planarspule nach der Art einer Sendespule mittels der Messelektronik mit einer hochfrequenten Wechselspannung beaufschlagbar. Zumindest eine der anderen Planarspulen, vorzugsweise zwei andere Planarspulen sind jeweils nach der Art einer Empfangsspule dazu vorgesehen, um in Zusammenwirkung mit der Messelektronik eine induktive Messgröße zu erfassen. Die Messelektronik ist dazu eingerichtet, um in Abhängigkeit der induktiven Messgröße einen Abstand zwischen dem Sensormodul und der niederohmigen Schicht der Struktur zu bestimmen.

In der Messkonfiguration, in der das Sensormodul einen induktiven Messsensor ausbildet, kann die Funktionsweise eines Wirbelstromsensors ausgenutzt werden, bei der ein mittels einer Sendespule erzeugtes magnetisches Wechselfeld mit einer niederohmigen Schicht der Struktur in Wechselwirkung tritt und diese Wechselwirkung oder eine Veränderung davon mittels zumindest einer Empfangsspule erfassbar ist. Insbesondere ist die als Sendespule ausbildbare Planarspule in einem Spulenstapel zwischen mindestens zwei anderen Planarspulen angeordnet, von denen zumindest eine, insbesondere beide als Empfangsspulen ausbildbar sind. Die Messelektronik ist eingerichtet, um in Abhängigkeit der induktiven Messgröße einen Abstand zwischen dem Sensormodul und der niederohmigen Schicht der Struktur zu bestimmen.

Das induktive Messsignal kann hierbei eine in der Empfangsspule induzierte Wechselspannung oder eine Differenz zwischen den Wechselspannungen zweier Empfangsspulen sein. Eine Amplitude eines solchen induktiven Messsignals ist insbesondere bei Frequenzen oberhalb von 1 Megahertz abhängig von dem Abstand zwischen dem Sensormodul und der Oberfläche der niederohmigen Schicht, insbesondere einem Abstand zwischen der Spulenebene der Sendespule und der Oberfläche des metallischen Substrats einer Batterieelektrode. Bei geringen Frequenzen durchdringen die Wirbelströme die µm dünne Metallschicht der Elektrode, wobei sich hierbei Elektrodendicken abhängige Amplituden und Phasenverschiebungen als störend ergeben. Durch die flache Bauform von Planarspulen ermöglicht es insbesondere, störende Dickeneinflüsse infolge eines frequenzabhängigen Eindringens des magnetischen Wechselfeldes in die niederohmige Schicht zu verringern, sodass eine hohe Genauigkeit bei der Abstandsmessung erreichbar ist. Gleichzeitig erzeugt die hochohmige Schicht, insbesondere eine graphithaltige Schicht, kein oder ein nur vernachlässigbar geringes Ausmaß an Wirbelströmen, sodass diese durchdrungen werden kann und dabei keine Einflüsse auf die Abstandsmessung gegenüber der niederohmigen Schicht hat.

In einer vorteilhaften Weiterbildung ist zur Ausbildung des kapazitiven Messsensors zumindest eine vorzugsweise außenliegende Planarspule des Spulenstapels nach der Art einer Messelektrode mittels der Messelektronik mit einer niederfrequenten Wechselspannung beaufschlagbar und dazu vorgesehen, um in Zusammenwirkung mit der Messelektronik eine kapazitive Messgröße zu erfassen. Zumindest eine zu der Messelektrode benachbarte Planarspule ist nach der Art einer Schirmelektrode dazu vorgesehen ist, den Erfassungsbereich gegenüber dem Sensormodul abzuschirmen. Die Messelektronik ist eingerichtet, um in Abhängigkeit der kapazitiven Messgröße einen Abstand zwischen dem Sensormodul und der hochohmigen Schicht der Struktur zu bestimmen.

In einer Messkonfiguration, bei der das Sensormodul einen kapazitiven Messsensor ausbildet, dient eine Planarspule als eine kapazitive Messelektrode, insbesondere indem nur ein Windungsende mittels der Schaltvorrichtung mit der Messelektronik verbunden ist und das jeweils andere Windungsende hochohmig geschaltet oder offen ist. Zweckdienlicherweise ist in dieser Messkonfiguration eine außenliegende Planarspule des Spulenstapels nach der Art einer Messelektrode ausgebildet und dient dazu, ein elektrisches Feld auszubilden, welches mit der hochohmigen Schicht der Struktur, insbesondere der Graphitschicht der Batterieelektrode, in Wechselwirkung tritt. Eine andere, insbesondere dazu benachbarte Planarspule des Spulenstapels kann in oben genannter Weise die Schirmelektrode bilden, insbesondere indem diese ebenfalls an nur einem Windungsende gegenüber dem Potential der Messelektrode auf ein anderes Bezugspotential, insbesondere auf Masse geschaltet ist.

Das kapazitive Messsignal kann in einer einfachen Form eine Wechselspannung sein, welche mittels der Messelektronik, insbesondere mittels einer Messschaltung der Messelektronik, erfassbar ist und welche von der Wechselwirkung des elektrischen Feldes mit der hochohmigen Schicht abhängig ist. Eine Amplitude eines solchen kapazitiven Messsignals ist insbesondere bei Frequenzen unterhalb von 50 Kilohertz abhängig von dem Abstand zwischen dem Sensormodul und der Oberfläche der hochohmigen Schicht, insbesondere zwischen der Spulenebene der Messelektrode und der Oberfläche einer graphithaltigen Schicht einer Batterieelektrode.

In einer vorteilhaften Weiterbildung ist die Messelektronik eingerichtet, um in Abhängigkeit der Differenz zwischen der kapazitiven Messgröße und der induktiven Messgröße eine Schichtdicke der hochohmigen Schicht zu bestimmen.

Die vorstehend beschriebene vorteilhafte Weiterbildung beruht auf der Erkenntnis, dass die aufeinander folgende Durchführung einer induktiven und kapazitiven Messung in der Messkonfiguration eine genaue Bestimmung der Schichtdicke der hochohmigen Schicht ermöglicht. Insbesondere ist dies möglich, indem zunächst in Abhängigkeit der induktiven Messgröße auf einen Abstand zwischen dem Sensormodul und der Oberfläche der niederohmigen Schicht und anschließend in Abhängigkeit der induktiven Messgröße auf einen Abstand zwischen dem Sensormodul und der Oberfläche der hochohmigen Schicht geschlossen wird. Anschließend kann durch Ermittlung einer Differenz zwischen den beiden Abständen die Schichtdicke der hochohmigen Schicht ermittelt werden.

Es liegt im Rahmen der Erfindung, dass die Schaltvorrichtung dazu eingerichtet ist, die Messkonfiguration zunächst zur Ausbildung des induktiven Messsensors und anschließend zur Ausbildung des kapazitiven Messsensors einzustellen oder umgekehrt. Dadurch können die Planarspulen ein und desselben Sensormoduls als zumindest zweierlei Arten von Messsensoren betrieben werden, um die mehrschichtige Struktur hochgenau zu charakterisieren.

In einer vorteilhaften Weiterbildung ist zur Ausbildung des kapazitiven Referenzsensors zumindest eine vorzugsweise außenliegende Planarspule des Spulenstapels nach der Art einer Schirmelektrode dazu vorgesehen, den Erfassungsbereich des kapazitiven Messsensors gegenüber einer Sensorumgebung abzuschirmen. Eine dazu benachbarte Planarspule ist nach der Art einer Referenzmesselektrode mittels der Messelektronik mit einer niederfrequenten Wechselspannung beaufschlagbar und dazu vorgesehen, um in Zusammenwirkung mit der Messelektronik eine kapazitive Referenzmessgröße zu erfassen. Die Messelektronik ist dazu eingerichtet, um in Abhängigkeit der kapazitiven Referenzmessgröße eine Relativlage zwischen der Referenzmesselektrode und einer anderen Planarspule des Spulenstapels zu bestimmen.

Die vorstehend beschriebene Weiterbildung betrifft einen Aspekt der oben bereits beschriebenen Wirkrichtungsumkehr. Indem eine Planarspule, insbesondere eine außenliegende Planarspule als Schirmelektrode geschaltet wird, kann eine andere, dazu benachbarte Planarspule als aktives Sensorelement dienen, um eine Sensormoduleigenschaft zu ermitteln, insbesondere einen Abstand gegenüber einer anderen Planarspulen des Spulenstapels. Dies ist besonders vorteilhaft, da die Abmessungen des Sensormoduls infolge von Temperaturschwankungen und Feuchte schwanken können und sich dies auf die Genauigkeit in der Messkonfiguration auswirken kann. In einer einfachen Ausführungsform ist die ermittelte Sensormoduleigenschaft zumindest mit einem Grenzwert abgleichbar, um ermitteln zu können, ob der Abstand zwischen zwei seiner Planarspulen, sich in einem tolerierbaren Zustand befindet.

Vorzugsweise werden für die Referenzkonfiguration, bei der die Planarspulen zumindest teilweise einen kapazitiven Referenzsensor ausbilden, dieselben Planarspulen mit der Messelektronik verbunden, wie diejenigen, die bei der Messkonfiguration zur Ausgestaltung der Messelektrode und der Schirmelektrode dienen. Im Unterschied dazu sind die Funktionen der genannten Planarspulen jedoch vertauscht. In anderen Worten fungiert die als Messelektrode dienende Planarspule des kapazitiven Messsensors als Schirmelektrode des kapazitiven Referenzsensors und die als Schirmelektrode dienende Planarspule des kapazitiven Messsensors als Referenzmesselektrode des kapazitiven Referenzsensors.

Das kapazitive Referenzmesssignal kann in einer einfachen Form eine Wechselspannung sein, welche mittels der Messelektronik, insbesondere mittels einer Messschaltung der Messelektronik, erfassbar ist und welche von der Wechselwirkung des elektrischen Feldes, welches mittels der Referenzmesselektrode erzeugbar ist, mit einer der anderen Planarspulen abhängig ist.

Bevorzugt ist die Messelektronik dazu eingerichtet, um in Abhängigkeit der Relativlage zwischen der Referenzmesselektrode und der anderen Planarspule des Spulenstapels einen Korrekturwert zu ermitteln und die Schichtdicke der hochohmigen Schicht in Abhängigkeit des Korrekturwertes zu bestimmen.

Die vorstehend beschriebene vorteilhafte Weiterbildung ist nicht darauf beschränkt, auf welche Weise der Korrekturwert bei der Bestimmung der Schichtdicke der hochohmigen Schicht berücksichtigt wird. In einer einfachen Ausführungsform kann in der Messelektronik oder damit verbundener Datenverarbeitungseinheit eine Lookup-Table hinterlegt sein, welche den Korrekturwert in Abhängigkeit der kapazitiven Referenzmessgröße angibt und mittelbar oder unmittelbar mit der ermittelten Schichtdicke verrechnet werden kann. Es liegt auch im Rahmen der vorteilhaften Weiterbildung, dass zusätzlich oder alternativ zu einer Lookup-Table ein mathematisches Modell hinterlegt ist, welches zum Beispiel einen analytischen und/oder numerischen und/oder statistischen und/oder experimentellen Zusammenhang zwischen dem Korrekturwert und der ermittelten kapazitiven Messgröße angibt und mittels dessen insbesondere die Schichtdicke der hochohmigen Schicht bestimmbar ist.

In einer vorteilhaften Weiterbildung ist zur Ausbildung eines induktiven Referenzsensors zumindest eine Planarspule mittels der Schaltvorrichtung des Spulenstapels kurzgeschlossen und eine andere Planarspule mittels der Messelektronik nach der Art einer Referenzsendespule mit einer hochfrequenten Wechselspannung beaufschlagbar. Zumindest eine zwischen der kurzgeschlossenen Planarspule und der Referenzsendespule liegende Planarspule ist nach der Art einer Referenzempfangsspule dazu vorgesehen, um in Zusammenwirkung mit der Messelektronik eine induktive Referenzmessgröße zu erfassen. Die Messelektronik ist eingerichtet, um in Abhängigkeit der induktiven Referenzmessgröße eine Eigenschaft der zwischenliegenden Planarspule, insbesondere ihre Funktionstauglichkeit, zu bestimmen.

Ein Vorteil der vorstehend beschriebenen Weiterbildung besteht darin, dass eine Selbstüberprüfung des Sensormoduls durchgeführt werden kann, indem eine der Planarspulen mittels eines Kurzschlusses seiner Windungsenden ein Prüfobjekt definiert, welches mit dem magnetischen Wechselfeld einer anderen Planarspule, die als Referenzsendespule dient, in Wechselwirkung treten kann und hierbei insbesondere Wirbelströme in der kurzgeschlossenen Planarspule erzeugt werden können. Die zwischenliegende Planarspule dient als Referenzempfangsspule und dient dazu, derartige Wechselwirkungen zu erfassen. Insbesondere bei Vorgabe einer Amplitude und Frequenz der Wechselspannung, mit der die Sendespule anregbar ist, ist mittels der Messelektronik überprüfbar, ob die induktive Referenzmessgröße, insbesondere deren Amplitude und/oder Frequenz, einen vorgegebenen Grenzwert über- oder unterschreitet. Dadurch lässt sich beispielsweise die Funktionstauglichkeit der besagten zwischenliegenden Planarspule bestimmen.

In einer vorteilhaften Weiterbildung ist das Sensormodul entlang der Stapelachse verstellbar gelagert. Hierfür kann ein weggesteuerter Aktuator vorgesehen sein, mittels dessen das Sensormodul verstellbar gelagert ist. Durch eine Verstellung lässt sich insbesondere in der Messkonfiguration der Erfassungsbereich des induktiven und/oder kapazitiven Messsensors verstellen, wodurch sich insgesamt ein großer Messbereich des Messsystems ergibt.

In einer vorteilhaften Weiterbildung umfasst das Sensormodul mehr als drei Planarspulen umfasst, die in dem Spulenstapel angeordnet sind. Insbesondere sind diese Planarspulen mittels der Schaltvorrichtung mit der Messelektronik kontaktierbar und bilden bedarfsweise, wie oben beschrieben, einen induktiven Messsensor oder einen kapazitiven Messsensor oder einen induktiven Referenzmesssensor oder einen kapazitiven Referenzmesssensor aus. Es gelten damit die gleichen Ausführungen zu den oben erläuterten Ausprägungen des erfindungsgemäßen Messsystems oder einer seiner vorteilhaften Weiterbildungen entsprechend.

Ein Vorteil, welcher mit der Ausgestaltung eines Sensormoduls einhergeht, das mehr als drei Planarspulen umfasst, hängt damit zusammen, das Planarspulen welche nicht als Sendespule, Empfangsspule, Messelektrode, Referenzsendespule, Referenzempfangsspule, Referenzmesselektrode konfiguriert sind, als schirmende Elemente eingesetzt werden können. Dies ist insbesondere vorteilhaft, da in der Referenzkonfiguration die Ermittlung der Sensormoduleigenschaft unter Anwesenheit der zu charakterisierenden Struktur, insbesondere einer Batterieelektrode, erfolgen kann, ohne dass diese die Referenzmessung beeinflusst oder umgekehrt.

In einer denkbaren Ausführungsform weist das Sensormodul insbesondere fünf Planarspulen auf, die in dem Spulenstapel angeordnet sind.

In der Messkonfiguration, in der das Sensormodul fünf Planarspulen aufweist, können zur Ausbildung eines induktiven Messsensors zwei außenliegende Planarspulen jeweils nach der Art eines elektrischen Schirms mit der Messelektronik kontaktiert sein und die drei verbleibenden Planarspulen, in oben beschriebener Weise, als Sendespule bzw. zwei Empfangsspulen geschaltet sein.

In der Messkonfiguration, in der das Sensormodul fünf Planarspulen aufweist, können zur Ausbildung eines kapazitiven Messsensors zwei außenliegende Planarspulen jeweils nach der Art einer Messelektrode mit der Messelektronik kontaktiert sein und zumindest deren jeweils benachbarte Planarspulen, in oben beschriebener Weise jeweils nach der Art eines elektrischen Schirms mit der Messelektronik kontaktiert sein.

In der Referenzkonfiguration, in der das Sensormodul für Planarspulen aufweist, können zur Ausbildung des induktiven Referenzsensors eine der außenliegenden Planarspulen nach der Art einer Referenzsendespule mit der Messelektronik kontaktiert sein und eine andere außenliegende Planarspule an den Windungsenden kurzgeschlossen sein. Die zwischenliegenden Planarspulen können jeweils eine Referenzempfängerspule ausbilden, welche insbesondere zeitlich aufeinander folgend mit der Messelektronik kontaktiert werden, um jeweils eine induktive Referenzmessgröße zu erfassen, damit jeweils eine Eigenschaft der Planarspulen, vorzugsweise deren Funktionstauglichkeiten, ermittelbar sind.

In der Referenzkonfiguration, in der das Sensormodul für Planarspulen aufweist, können zur Ausbildung des kapazitiven Referenzsensors zwei außenliegende Planarspulen jeweils nach der Art eines elektrischen Schirms mit der Messelektronik kontaktiert sein und zumindest deren jeweils benachbarte Planarspulen, insbesondere zeitlich aufeinanderfolgend als Referenzmesselektroden mit der Messelektronik kontaktiert sein, um den Abstand zueinander zu ermitteln, insbesondere unter Mittelwertbildung zweier zeitlich aufeinanderfolgend ermittelter Abstände.

Vorzugsweise ist die Schaltvorrichtung dazu ausgebildet ist, aus dem Spulenstapel einen Teil der Planarspulen zur Ausbildung der Messsensors und/oder zur Ausbildung des Referenzsensors mit der Messelektronik zu kontaktieren. Dies ist insbesondere vorteilhaft, wenn das Sensormodul mehr als drei Planarspulen umfasst, sodass nur manche von Ihnen zur Ausbildung der jeweiligen Sensoren dienen. Dadurch sind insbesondere Planarspulen auswählbar, wodurch sich der Erfassungsbereich in der Messkonfiguration und/oder der Referenzkonfiguration bedarfsweise verstellen, insbesondere räumlich entlang der Stapelachse verlagern, lässt.

Eine derartige räumliche Verstellung des Erfassungsbereichs ist insbesondere vorteilhaft für die Ausgestaltung des induktiven Messsensors. Denn obwohl der induktive Messsensor mit nur drei Planarspulen grundsätzlich in der Lage ist, einen Erfassungsbereich mit einer Erstreckung von bis zu 10 mm parallel zur Stapelachse auszubilden, reduziert sich dessen Sensitivität mit zunehmendem Abstand von dem Sensormodul. Zwar lässt sich dem durch eine Verstärkung der anliegenden Wechselspannung an der Sendespule entgegenwirken, jedoch verändert sich hierdurch typischerweise auch das Signal-Rausch-Verhältnis der induktiven Messgröße. Daher kann die Schaltvorrichtung eingerichtet sein, um zeitlich aufeinanderfolgend mindestens zwei unterschiedliche Planarspulen des Sensormoduls nach der Art einer Sendespule und zumindest eine andere Planarspule nach der Art einer Empfangsspule mit der Messelektronik zu kontaktieren. Infolge der dadurch erreichbaren Verlagerung des Erfassungsbereiches lässt sich bereits bei einem Abstand von mindestens 10 Mikrometern zwischen den zwei ausgewählten Sendespulen die gewünschte Sensitivität erreichen.

Ein vergleichbarer Vorteil lässt sich für die Ausgestaltung des kapazitiven Messsensors erreichen. Hierbei kann die Schaltvorrichtung eingerichtet sein, um zeitlich aufeinanderfolgend mindestens zwei unterschiedliche Planarspulenpaare des Sensormoduls nach der Art einer Messelektrode und eines elektrischen Schirms mit der Messelektronik zu kontaktieren, wodurch der Erfassungsbereich ebenfalls entlang der Stapelachse verstellbar ist.

Vorzugsweise ist die Schaltvorrichtung dazu eingerichtet, um bedarfsweise mindestens zwei Planarspulen elektrisch in Reihe zu schalten. Dies ist insbesondere denkbar, wenn mehr als drei Planarspulen in dem Spulenstapel angeordnet sind. Ein Vorteil, der sich ergibt, besteht darin, dass die Windungsanzahl einer Planarspule um die Windungsanzahl mindestens einer anderen Planarspule erweitert werden kann. Hierdurch ist es insbesondere möglich, die Gesamtwindungsanzahl einer Sendespule und/oder Empfangsspule eines induktiven Messsensors und/oder einer Referenzsendespule und/oder Referenzempfangsspule eines induktiven Referenzsensors stufenweise einzustellen.

Es ist vorteilhaft, wenn die Schaltvorrichtung ausgebildet ist, um in der Messkonfiguration zeitlich aufeinanderfolgend zwei induktive Messsensoren auszubilden, welche jeweils zumindest eine Sendespule umfassen, deren Gesamtwindungszahl sich unterscheidet. Diese Ausprägung der Messkonfiguration beruht auf der Erkenntnis, dass geringe Windungszahlen einer Planarspule vorteilhaft sind, um ein hochfrequentes magnetisches Wechselfeld zu erzeugen. Während Frequenzen oberhalb von 1 Megahertz vorteilhaft sind, um in oben bereits beschriebener Weise, den Abstand zwischen dem Sensormodul und der Oberfläche des niederohmigen Schicht zu ermitteln, können unterhalb von 1 Megahertz bei einer vergleichsweise höheren Windungsanzahl andere Eigenschaften ermittelt werden, insbesondere solche, die erst infolge einer höheren Eindringtiefe des magnetischen Wechselfeldes erfassbar sind. Ebenso ist es denkbar, dass mindestens zwei Planarspulen in Reihe geschaltet werden, um eine Empfangsspule auszubilden.

Insbesondere ist es denkbar, dass die Schaltvorrichtung dazu eingerichtet ist, mindestens zwei Planarspulen des Spulenstapels elektrisch in Reihe zu schalten, welche durch mindestens eine andere Planarspule voneinander getrennt sind. Hieraus ergeben sich insbesondere Vorteile, wenn die zwei in Reihe geschalteten Planarspulen als eine zusammenhängende Empfangsspule mit der Messelektronik kontaktiert ist und die zumindest eine zwischenliegende andere Planarspule als Sendespule eines induktiven Messsensors dienen sollen. Dadurch lässt sich eine parasitäre Kapazität der in Reihe geschalteten Planarspulen auf ein tolerierbares Minimum reduzieren sowie die Resonanzfrequenz bedarfsweise verändern.

Bevorzugt ist bei einem Sensormodul mit mehr als drei Planarspulen die Schaltvorrichtung dazu eingerichtet, zumindest einen Teil der Planarspulen in einer vorteilhaften Reihenfolge zu schalten. Die Reihenfolge bestimmt sich hierbei nach der Position der zu verschaltenden Planarspulen in dem Spulenstapel, wobei insbesondere eine erste Gruppe von Planarspulen und eine zweite Gruppe von Planarspulen durch zumindest eine Planarspule voneinander getrennt sind. Die Planarspulen der ersten und zweiten Gruppe können hierbei symmetrisch in Bezug auf die zwischenliegende Planarspule des Spulenstapels angeordnet sein und sind derart verbunden, dass die Planarspulen gleicher Position in der ersten und zweiten Gruppe zu Spulenpaaren in Reihe geschaltet sind und diese Spulenpaare ebenfalls miteinander in Reihe geschaltet sind. Untersuchungen haben gezeigt, dass sich hierdurch parasitäre Kapazitäten wirkungsvoll reduzieren lassen.

In einer vorteilhaften Weiterbildung ist zur Ausbildung des kapazitiven Messsensors eine vorzugsweise außenliegende Planarspule des Spulenstapels nach der Art einer Messelektrode mittels der Messelektronik in zwei niederfrequenten Bereichen mit Wechselspannung beaufschlagbar. Diese Planarspule ist in Zusammenwirkung mit der Messelektronik dazu vorgesehen, in einem ersten niederfrequenten Bereich eine erste kapazitive Messgröße zu erfassen und in dem zweiten niederfrequenten Bereich eine zweite kapazitive Messgröße zu erfassen. Die Messelektronik ist dazu eingerichtet ist, um in Abhängigkeit einer Amplitude der ersten Messgröße und einer Phasenlage der zweiten Messgröße einen Flächenwiderstand der hochohmigen Schicht zu bestimmen. Zweckdienlicherweise kann eine dazu benachbarte Planarspule als Schirmelektrode dienen.

Die vorstehend beschriebene Weiterbildung beruht auf der Erkenntnis der Anmelderin, dass es mittels des erfindungsgemäßen Messsystems möglich ist, neben der Schichtdicke der hochohmigen Schicht auch auf weitere Schichteigenschaften zu schließen. Insbesondere gehören hierzu die Ermittlung des Flächenwiderstandes der hochohmigen Schicht, da dieser einen Rückschluss auf ihre Feuchte und Dichte zulässt.

Letztgenannte sind besonders am Beispiel der Batterieelektrode relevant, da deren Herstellung einen qualitätsrelevanten Trocknungsschritt sowie ein Kalandrieren umfasst, nach denen die Feuchte bzw. Dichte wie gewünscht vorliegen müssen.

Die Ermittelbarkeit der Feuchte und der Dichte der hochohmigen Schicht beruht darauf, dass diese in Wechselwirkung mit den ohmschen Eigenschaften der hochohmigen Schicht stehen und bei verschiedenen Frequenzen ermittelbar sind. Insbesondere hat bei vergleichsweise tiefen Frequenzen die resistive Änderung der hochohmigen Schicht einen vernachlässigbaren Einfluss auf die Phasenlage einer kapazitiven Messgröße. Hierdurch lässt sich der Abstand zwischen dem Sensormodul und der Oberfläche der hochohmigen Schicht ermitteln. Bei vergleichsweise höheren Frequenzen, insbesondere oberhalb von 500 Kilohertz, ändert sich die Phasenlage jedoch in Abhängigkeit des ohmschen Widerstandes, wodurch sich dieser ermitteln lässt. Unter Berücksichtigung der Schichtdicke, die in bereits beschriebener Weise in Abhängigkeit der induktiven Messgröße ermittelbar ist, kann der Flächenwiderstand ermittelt werden.

Zwecks begrifflicher Abgrenzung liegen die Frequenzen des ersten und zweiten niederfrequenten Bereichs beide unterhalb eines oben ebenfalls genannten hochfrequenten Bereichs. Insbesondre liegt ein hochfrequenter Bereich oberhalb von etwa 1 Megahertz.

Wie oben erwähnt, wird die Aufgabe der Erfindung auch gelöst durch ein Sensormodul nach Anspruch 14. Das erfindungsgemäße Sensormodul ist dafür geeignet, um mit einem erfindungsgemäßen Messsystem oder einer seiner vorteilhaften Weiterbildungen eingesetzt zu werden und umfasst mindestens drei Planarspulen, die in einem Spulenstapel angeordnet sind. Hinsichtlich der dadurch erreichbaren Vorteile sowie möglichen Ausprägungen des Sensormoduls gelten die Ausführungen zum erfindungsgemäßen Messsystem sowie seinen vorteilhaften Weiterbildungen entsprechend.

Wie ebenfalls erwähnt, wird die Aufgabe der Erfindung auch gelöst durch eine Fertigungsanlage für eine mehrschichtige Struktur mit schichtweise unterschiedlichen ohmschen Eigenschaften mit einem erfindungsgemäßen Messsystem oder einer vorteilhaften Weiterbildung davon.

Insbesondere handelt es sich um eine Fertigungsanlage für eine Batterieelektrode, welche eine niederohmige metallische Schicht aufweisen kann und eine darauf angebrachte hochohmige Graphitschicht. Eine solche Fertigungsanlage kann beispielsweis Förderwalzen oder ein vergleichbares Fördermittel umfassen, mittels dessen die niederohmige Schicht gefördert und dabei mit der hochohmigen Schicht versehen ist. Das Sensormodul des Messsystems ist hierbei derart angeordnet, dass die zu charakterisierende Struktur zumindest teilweise in seinen Erfassungsbereich tritt. Bevorzugt weist das Messsystem mehrere Sensormodule auf, welche nach der Art eines Sensorarrays angeordnet sind. Bevorzugt sind die Sensormodule als Linienarray angeordnet, welches sich im Wesentlichen quer zur Förderachse der Struktur erstreckt. Im Übrigen gelten die Ausführungen zum erfindungsgemäßen Messsystem sowie seinen vorteilhaften Weiterbildungen entsprechend.

Sofern die Fertigungsanlage zur Herstellung einer Batterieelektrode dient, ist es vorteilhaft, wenn zumindest ein Sensormodul in Bezug auf die Förderrichtung der Batterieelektrode hinter einem Kalander angeordnet ist und/oder hinter einer Trocknungsvorrichtung.

Auch wird die Aufgabe der Erfindung gelöst durch ein Verfahren zur Charakterisierung einer mehrschichtigen Struktur mit schichtweise unterschiedlichen ohmschen Eigenschaften mit den folgenden Verfahrensschritten:
A) Bereitstellen eines Sensormoduls, einer Schaltvorrichtung und einer Messelektronik, wobei das Sensormodul mehr als zwei Planarspulen umfasst, die in einem Spulenstapel angeordnet sind und wobei die elektrische Schaltvorrichtung mit den Planarspulen kontaktiert ist und dafür eingerichtet ist, die Planarspulen mit der Messelektronik zu verbinden;
B) Ansteuerung der Schaltvorrichtung, so dass die Planarspulen in eine Messkonfiguration gebracht werden, wobei die Planarspulen zumindest teilweise einen induktiven und/oder kapazitiven Messsensor ausbilden, dessen Erfassungsbereich sich im Wesentlichen außerhalb des Sensormoduls erstreckt und dabei eine Eigenschaft einer niederohmigen und/oder hochohmigen Schicht der Struktur erfasst wird;
C) Ansteuerung der Schaltvorrichtung, so dass die Planarspulen in eine Referenzkonfiguration gebracht werden, wobei die Planarspulen zumindest teilweise einen kapazitiven und/oder induktiven Referenzsensor ausbilden, dessen Erfassungsbereich sich im Wesentlichen innerhalb des Sensors erstreckt und dabei eine Eigenschaft des Sensormoduls erfasst wird.

Vorzugsweise wird das erfindungsgemäße Verfahren mit einem erfindungsgemäßen Messsystem oder einer vorteilhaften Weiterbildung hiervon durchgeführt. Insbesondere ist das erfindungsgemäße Messsystem oder eine vorteilhafte Weiterbildung davon dazu geeignet, um das erfindungsgemäße Verfahren durchzuführen. Hinsichtlich der durch das Verfahren erreichbaren Vorteile sowie seiner möglichen Ausprägungen gelten die Ausführungen zum erfindungsgemäßen Messsystem sowie seinen vorteilhaften Weiterbildungen entsprechend.

Vorteile der Erfindung seien nachfolgend anhand von Ausführungsbeispielen und den Figuren erläutert.

Es zeigen
- Figur 1: eine schematische Seitenansicht a) eines ersten Messsystems zur Charakterisierung einer mehrschichtigen Struktur mit fünf Planarspulen sowie eine schematische Draufsicht b) auf eine Planarspule;
- Figur 2: eine schematische Darstellung a) einer Messkonfiguration, bei der das Sensormodul des Messsystems einen induktiven Messsensor ausbildet und eine schematische Darstellung b) einer Messkonfiguration, bei der das Sensormodul des Messsystems einen kapazitiven Messsensor ausbildet;
- Figur 3: eine schematische Darstellung a) einer Referenzkonfiguration, bei der das Sensormodul des Messsystems einen induktiven Referenzsensor ausbildet und eine schematische Darstellung b) einer Messkonfiguration, bei der das Sensormodul des Messsystems einen kapazitiven Referenzsensor ausbildet;
- Figur 4: eine schematische Seitenansicht eines zweiten Messsystems;
- Figur 5: eine schematische Seitenansicht a) des Sensormoduls des zweiten Messsystems zur Ermittlung eines Flächenwiderstandes, Messgrößenverläufe in kartesischen Koordinaten in Ansicht b) und als Zeigerdiagramm in Ansicht c).

Batterieelektroden stellen typischerweise Strukturen mit schichtweise unterschiedlichen ohmschen Eigenschaften dar. Hierbei liegt eine metallische Komponente, die als Stromableiter dient, typischerweise als Kupfer- oder Aluminiumfolie vor und ist oberflächlich mit einer Graphitschicht versehen. Die metallische Komponente weist dabei typischerweise eine höhere elektrische Leitfähigkeit auf als die Graphitschicht mit einer vergleichsweise niedrigeren elektrischen Leitfähigkeit. In Bezug zueinander handelt es sich dabei mithin um eine niederohmige Schicht bzw. eine hochohmige Schicht der Batterieelektrode.

Die Qualität der Batterieelektrode ist hoch relevant für die Qualität der Batteriezelle, in der sie zum Einsatz kommt, wobei insbesondere die elektrischen Eigenschaften eine wichtige Rolle spielen. Diese hängen insbesondere von den Eigenschaften der hochohmigen Schicht zusammen. Nachfolgend sind Mittel erläutert, mit denen insbesondere die Schichtdicke sowie weitere Eigenschaften der hochohmigen Schicht hochgenau und mit einem geringen Integrationsaufwand während ihrer Herstellung ermittelt werden können.

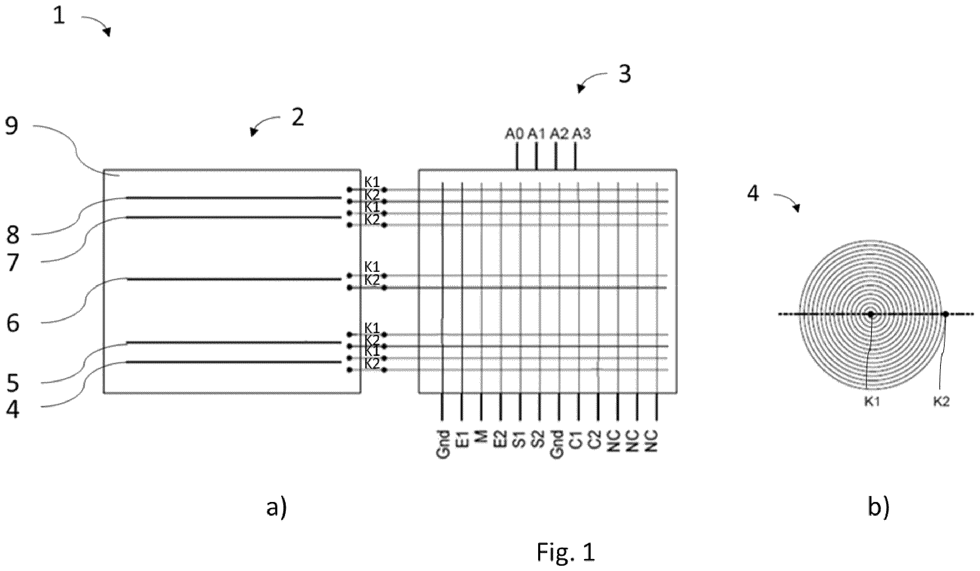

Figur 1 zeigt in Ansicht a) ein Messystem 1, welches ein Sensormodul 2, eine elektrische Schaltvorrichtung 3 sowie eine Messelektronik (nicht gezeigt) umfasst.

Das Sensormodul 2 ist als Printed Circuit Board (PCB) ausgestaltet, bei dem fünf Planarspulen 4, 5, 6, 7, 8 in einem Spulenstapel angeordnet sind und die Sensorelemente des Sensormoduls 2 definieren. Die Planarspulen 4, 5, 6, 7, 8 liegen jeweils als eine im Wesentlichen eben verlaufende, spiralförmige Kupferbahn vor und sind paarweise mittels eines elektrisch isolierenden Trägermaterials voneinander 9 getrennt. Eine Draufsicht auf eine solche Planarspule 4, 5, 6, 7, 8 ist beispielhaft anhand von Planarspule 4 in Ansicht b) der Figur 1 gezeigt. Die Planarspulen 4, 5, 6, 7, 8 sind im Wesentlichen baugleich und liegen in Bezug auf eine gemeinsame Stapelachse, welche gemäß Ansicht a) der Figur 1 in der Bildebene liegt, konzentrisch vor.

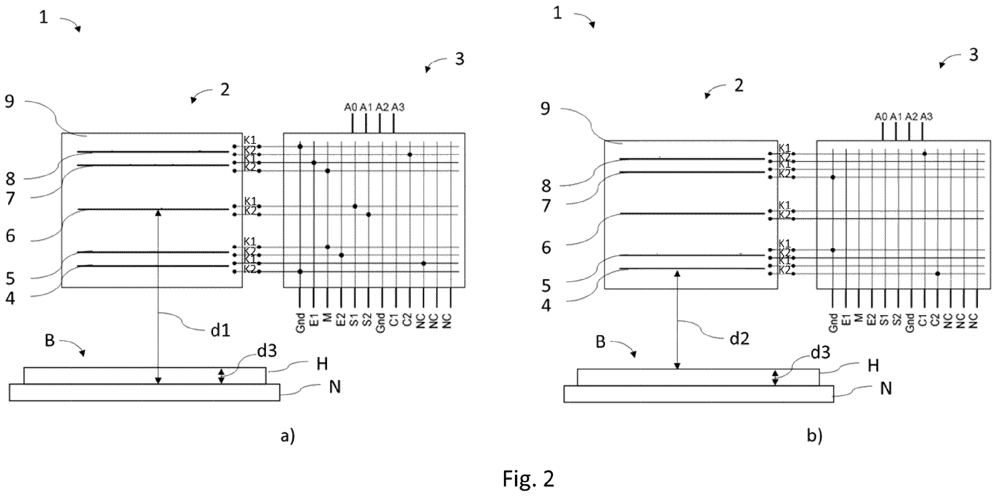

Die Planarspulen 4, 5, 6, 7, 8 weisen jeweils zwei Windungsenden K1 und K2 auf, über die sie jeweils mit der Schaltvorrichtung 3 elektrisch kontaktiert sind. Die Schaltvorrichtung 3 ist in dem in Figur 1 gezeigten Ausführungsbeispiel als Field Programmable Analog Array ausgebildet. Hierbei handelt es sich um einen integrierten Schaltkreis, welcher mit einer kompakten Bauweise eine Verarbeitung analoger Signale ermöglicht. Hierfür können über die Steuereingänge A0, A1, A2, A3 Steuersignale eingegeben werden, in deren Abhängigkeit die analogen Eingänge, die in dem hier gezeigten Ausführungsbeispiel mit den jeweiligen Windungsenden K1, K2 der Planarspulen 4, 5, 6, 7, 8 kontaktiert sind, bedarfsweise miteinander verbunden sowie an die analogen Ausgänge Gnd, E1, M, E2, S1, S2, Gnd, C1, C2, NC, NC, NC durchgeschaltet werden können, an denen die Messelektronik (nicht gezeigt) angeschlossen ist. Dies wird anhand von Beispielen in den Figuren 2 bis 7 zur besseren Anschaulichkeit erläutert.

Es ist relevant, dass die Schaltvorrichtung 3 eingerichtet ist, um zumindest einen Teil die Planarspulen 4, 5, 6, 7, 8 zwischen zumindest einer Messkonfiguration und einer Referenzkonfiguration umzuschalten. In der Messkonfiguration bilden die Planarspulen 4, 5, 6, 7, 8 zumindest teilweise einen induktiven oder kapazitiven Messsensor aus, dessen Erfassungsbereich, sich außerhalb des Sensormoduls 2 erstreckt. Dadurch kann eine Eigenschaft einer niederohmigen Schicht N oder hochohmigen Schicht H einer zu charakterisierenden Struktur, beispielsweise einer Batterieelektrode B, bestimmt werden. In der Referenzkonfiguration bilden mindestens drei der Planarspulen 4, 5, 6, 7, 8 einen induktiven und/oder kapazitiven Referenzsensor aus, dessen Erfassungsbereich sich im Wesentlichen innerhalb des Sensormoduls erstreckt, um eine Sensormoduleigenschaft zu bestimmen.

Obwohl das in Ansicht a) der Figur 1 gezeigte Sensormodul 2 fünf Planarspulen 4, 5, 6, 7, 8 umfasst, wäre es zur Realisierung der Messkonfiguration sowie der Referenzkonfiguration ausreichend, wenn lediglich drei Planarspulen, zum Beispiel die Planarspulen 5, 6, 7 in dem Spulenstapel vorlägen. Vorteilhafterweise lassen sich mit mehr als drei Planarspulen vorteilhafte Funktionen in den genannten Konfigurationen abbilden, die nachfolgend beispielhaft erläutert sind.

Gemäß Ansicht a) der Figur 2 ist die Schaltvorrichtung 3 eingestellt, um die Planarspulen 4, 5, 6, 7, 8 mit der Messelektronik für eine Messkonfiguration zu kontaktieren, sodass die Planarspulen 4, 5, 6, 7, 8 einen induktiven Messsensor ausbilden. Hierbei ist die Planarspule 6 nach der Art einer Sendespule an ihren Windungsenden K1, K2 mit den Anschlüssen S1 bzw. S2 kontaktiert, über die die Messelektronik die Planarspule 6 mit einer hochfrequenten Wechselspannung oberhalb von 1 Megahertz beaufschlagen kann. Die Planarspulen 5 und 7 sind jeweils nach der Art einer Empfangsspule mit ihren jeweiligen Windungsenden K1, K2 mit den Anschlüssen M bzw. E2 sowie M bzw. E1 kontaktiert, über die die Messelektronik eine induktive Messgröße erfassen kann.

Infolge der hochfrequenten Wechselspannung erzeugt die als Sendespule dienende Planarspule 6 ein magnetisches Wechselfeld, welches in der niederohmigen Schicht N einer Batterieelektrode B Wirbelströme hervorruft. Eine Wechselwirkung zwischen dem magnetischen Wechselfeld und den Wirbelströmen ist von den als Empfangsspulen dienenden Planarspulen 7 und 8 sowie die Messelektronik erfassbar. Die induktive Messgröße kann hierbei in einem einfachen Fall eine messbare Wechselspannung oder davon abhängige Größe sein, deren Amplitude indirekt den Abstand d1 zwischen dem Sensormodul 1, insbesondere der Planarspule 6, und der Oberfläche der niederohmigen Schicht N angibt. Die hochohmige Schicht H bildet keine Wirbelströme aus, sodass diese die induktive Messgröße nicht beeinflussen.

Die Planarspulen 4, 8 sind in dem hier gezeigten Ausführungsbeispiel mit ihren jeweiligen Windungsenden K1, K2 einerseits an ein Bezugspotential Gnd der Messelektronik kontaktiert bzw. an die Anschlüsse C2 sowie NC der Messelektronik hochohmig geschaltet, sodass sie ebenfalls einen vernachlässigbaren Einfluss auf die induktive Messgröße haben. Alternativ könnten die Windungsenden der Planarspulen 4 und 9 anstelle der Anschlüsse C2 bzw. NC auch offen sein, um einen vergleichbaren Effekt zu erzielen.

Gemäß Ansicht b) der Figur 2 ist die Schaltvorrichtung 3 derart eingestellt, um die Planarspulen 4, 5, 6, 7, 8 für eine Messkonfiguration derart mit der Messelektronik zu kontaktieren, dass ein Teil der Planarspulen 4, 5, 6, 7, 8 einen kapazitiven Messsensor ausbildet. Hierbei ist die Planarspule 4 nach der Art einer Messelektrode mit einem Ihrer Windungsenden K2 an den Anschluss C2 kontaktiert und mit dem anderen Windungsende K2 offen. Durch Anlegen einer niederfrequenten Wechselspannung gegenüber seiner Umgebung, insbesondere unterhalb von 50 Kilohertz, bildet die Planarspule 4 ein kapazitives Sensorelement aus. Ein dadurch ausgebildetes Wechselfeld tritt mit der hochohmigen Schicht **H,** also der Graphitschicht der Batterieelektrode B in Wechselwirkung. Dies lässt sich durch die Messelektronik an Anschluss C2 als eine kapazitive Messgröße ermitteln, welche insbesondere ebenfalls als messbare Wechselspannung oder davon abhängige Größe vorliegen kann, deren Amplitude indirekt den Abstand d2 zwischen dem Sensormodul 1, insbesondere Planarspule 4, und der Oberfläche der hochohmigen Schicht H angibt.

Die Planarspule 5, welche in dem Spulenstapel zu der Planarspule 4 benachbart ist, dient als elektrischer Schirm gegenüber dem Sensormodul 2, damit die anderen Planarspulen 6, 7, 8 sowie andere Sensorkomponenten keinen oder zumindest gleichbleibenden Einfluss auf die kapazitive Messgröße haben. Hierfür ist die Planarspule 5 an einem Windungsende K1 an ein Bezugspotential Gnd der Messelektronik kontaktiert und das andere Windungsende K2 offen.

Durch ein zeitlich aufeinanderfolgendes Einrichten des induktiven Messsensors gemäß Ansicht a) der Figur 1 und des kapazitiven Messsensors gemäß Ansicht b) der Figur 1 lassen sich an ein und derselben Batterieelektrode die Abstände d1 und d2 bestimmen. Zumindest in Kenntnis der Relativlage der Planarspulen 4, 5, 6, 7, 8 lässt sich durch Differenzbildung zwischen den Abständen d1 und d2 auf eine Dicke d3 der hochohmigen Schicht schließen.

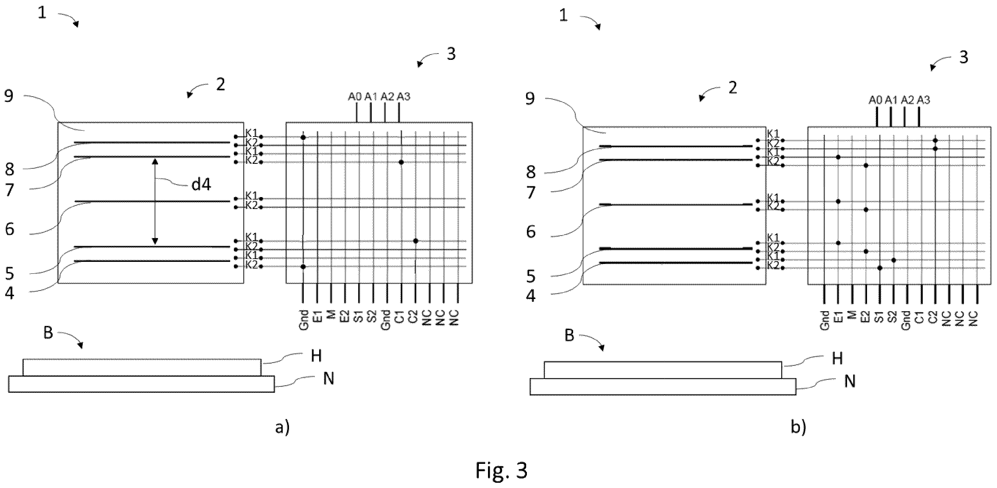

In Ansicht a) der Figur 3 ist eine Referenzkonfiguration des Messsystems 1 gezeigt, bei der die Schaltvorrichtung 3 derart eingestellt ist, um die Planarspulen 4, 5, 6, 7, 8 mit der Messelektronik so zu kontaktieren, dass ein kapazitiver Referenzsensor ausgebildet wird. Dadurch ist es zumindest möglich, einen Abstand zwischen den Planarspulen 5 und 7 zu bestimmen.

Der kapazitive Referenzsensor gemäß Ansicht a) der Figur 3 ist ausgebildet, indem die außenliegenden Planarspulen 4 und 8 nach der Art eines elektrischen Schirms mit der Messelektronik verbunden werden. Hierfür liegt jeweils ein Windungsende an dem Bezugspotential Gnd der Messelektronik an, während das jeweils andere Windungsende offen ist. Die dazu benachbarten Planarspulen 5 bzw. 7 dienen als Referenzmessspulen, mittels derer zeitlich aufeinanderfolgend ein Abstand d4 zueinander ermittelt werden kann. Hierfür kann zunächst eine der Planarspulen 5 oder 7 über den Anschluss C2 oder C1 als eine Referenzmesselektrode ausgebildet werden, mittels derer ein elektrisches Feld erzeugt wird, das sich im Wesentlichen innerhalb des Sensormoduls 2 erstreckt. Über die Wechselwirkung dieses elektrischen Wechselfeldes mit der jeweils anderen Planarspule 7 bzw. 5 kann über eine messbare kapazitive Referenzmessgröße auf den Abstand d4 geschlossen werden.

Eine derartige Referenzmessung ist vorteilhaft, da mit dem Abstand d4 eine Relativlage der Planarspulen 5 und 7 ermittelt werden kann und dadurch zumindest näherungsweise auch die Positionen der anderen Planarspulen 4, 6, 8, insbesondere wenn das Sensormodul 2 in Bezug auf die Positionen seiner Planarspulen 4, 5, 6, 7, 8 symmetrisch ausgebildet ist.

Es ist ein Vorteil, dass die kapazitive Referenzmessung in Anwesenheit der zu charakterisierenden Batterieelektrode B durchgeführt werden kann, ohne dass sie einen störenden Einfluss auf das Ergebnis der kapazitiven Referenzmessung hat.

In Ansicht b) der Figur 3 ist eine Referenzkonfiguration des Messsystems 1 gezeigt, bei der die Schaltvorrichtung 3 derart eingestellt ist, um die Planarspulen 4, 5, 6, 7, 8 mit der Messelektronik so zu kontaktieren, dass ein induktiver Referenzsensor ausgebildet wird. Dadurch ist es zumindest möglich, eine Funktionstauglichkeit der Planarspulen 5, 6 und 7 zu bestimmen.

Der induktive Referenzsensor gemäß Ansicht b) der Figur 3 ist ausgebildet, indem Planarspule 9 mittels der Schaltvorrichtung des Spulenstapels kurzgeschlossen und die Planarspule 4 mittels der Messelektronik nach der Art einer Referenzsendespule mit einer hochfrequenten Wechselspannung beaufschlagt wird. Die zwischen der kurzgeschlossenen Planarspule 9 und der Referenzsendespule 4 liegenden Planarspulen 5, 6, 7 sind jeweils nach Art einer Referenzempfangsspule dazu vorgesehen ist, um in Zusammenwirkung mit der Messelektronik eine induktive Referenzmessgröße zu erfassen. Hierfür werden die Planarspulen 5, 6, 7 an ihren jeweiligen Windungsenden K1, K2 zeitlich aufeinanderfolgend mit den Anschlüssen E1 bzw. E2 verbunden. In Abhängigkeit der induzierten Spannungen in den Planarspulen 5, 6, 7 kann auf ihre Funktionstüchtigkeit geschlossen werden.

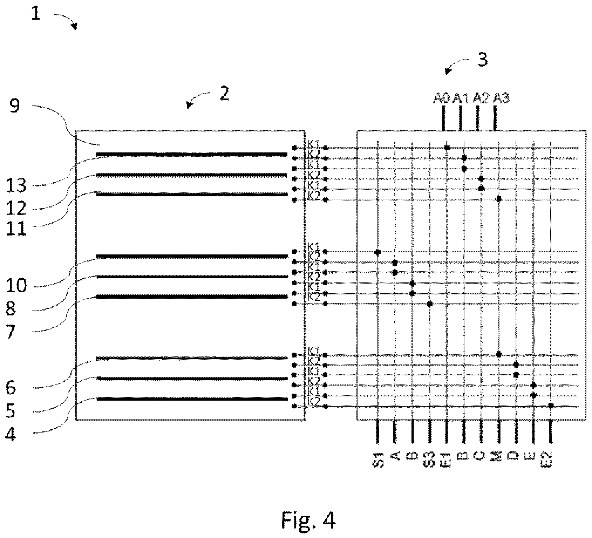

Figur 4 zeigt ein zweites Messsystem 1, welches ein Sensormodul 2, eine Schaltvorrichtung 3 und eine Messelektronik (nicht gezeigt) aufweist. Wie in Bezug auf die Figuren 1 bis 3 erläutert, ist das Sensormodul nach der Art eines Printed Circuit Boards ausgebildet. Wie in Bezug auf die Ausführungsformen gemäß den Figuren 1 bis 3 erläutert, ist es mittels des zweiten Messsystems 1 gemäß Figur 4 ebenfalls möglich, eine Messkonfiguration sowie eine Referenzkonfiguration einzurichten, sodass im Wesentlichen die gleichen Ausführungen gelten. Wie anhand von Figur 4 jedoch erkennbar ist, weist das Sensormodul 2 mehr als fünf Planarspulenauf, die in einem Trägermaterial 9 angeordnet sind.

Mittels der Schaltvorrichtung 3 ist es möglich, aus dem Spulenstapel einen Teil oder alle der Planarspulen 4, 5, 6, 7, 8, 10, 11, 12, 13 zur Ausbildung eines Messsensors oder Referenzsensors mit der Messelektronik zu kontaktieren. Hierbei ist es beispielsweise möglich, einzelne Planarspulen 4, 5, 6, 7, 8, 10, 11, 12, 13 aus dem Spulenstapel auszuwählen und nur diese für die Ausbildung des Messsensors oder des Referenzsensors zu verwenden oder jedoch in Reihe zu schalten, um die Sensormoduleigenschaften zu beeinflussen.

In dem in Figur 4 gezeigten Beispiel können die Planarspulen 4, 5, 6 mittels der Schaltvorrichtung 3 in Reihe geschaltet sein und über das Windungsende K1 der Planarspule 6 mit Anschluss S1 sowie über das Windungsende K2 der Planarspule 4 mit der Messelektronik kontaktiert sein. Durch Beaufschlagen der Reihenschaltung der Planarspulen 4, 5, 6 kann in oben bereits beschriebener Weise ein magnetisches Wechselfeld erzeugt werden, welches jedoch infolge der erhöhten Windungszahl zum Beispiel in einem anderen Frequenzbereich liegen kann als beim Messsystem 1 gemäß den Figuren 1 bis 3. Entsprechend können die Planarspulen 4, 5, 6, 11, 12, 13 in Reihe geschaltet sein, um nach er Art einer Empfangsspule eines induktiven Messsensors zu fungieren.

In hier nicht gezeigter Weise kann die Schaltvorrichtung eingerichtet sein, um zeitlich aufeinanderfolgend mindestens zwei unterschiedliche Planarspulen des Sensormoduls nach der Art einer Sendespule und zumindest eine andere Planarspule nach der Art einer Empfangsspule mit der Messelektronik zu kontaktieren. Infolge der dadurch erreichbaren Verlagerung des Erfassungsbereiches kann die Sensitivität eines derartigen Messsensors kann ein gewünschter Sensitivitätsbereich eingestellt werden. Ein vergleichbarer Vorteil lässt sich für die Ausgestaltung des kapazitiven Messsensors erreichen. Hierbei kann die Schaltvorrichtung eingerichtet sein, um zeitlich aufeinanderfolgend mindestens zwei unterschiedliche Planarspulenpaare des Sensormoduls nach der Art einer Messelektrode und eines elektrischen Schirms mit der Messelektronik zu kontaktieren.

Alternativ zu der in Figur 4 gezeigten Verschaltung kann es ferner vorteilhaft sein, wenn die Planarspulen 4, 5, 6, 11, 12, 13in Reihe geschaltet werden, um parasitäre Kapazitäten des Sensormoduls zu reduzieren. Insbesondere ist es vorteilhaft, wenn die Planarspulen paarweise verschaltet werden, sodass zwischen den Planarspulen eines in Reihe geschalteten Planarspulenpaars zumindest eine andere Planarspule angeordnet ist. Anhand des in Figur 4 gezeigten Beispiels ist eine Reihenschaltung denkbar, bei der die Planarspulen in der Reihenfolge 4, 13, 5, 12, 6, 11 in Reihe geschaltet sind und jeweils ein Windungsende der Planarspulen 4 und 11 zur Erfassung der induktiven Messgröße mit der Messelektronik kontaktiert sind.

Darüber hinaus kann das in Figur 4 gezeigte Sensormodul ebenfalls so verschaltet werden, dass eine außenliegende Planarspule des Spulenstapels nach der Art einer Messelektrode mittels der Messelektronik in zwei niederfrequenten Bereichen mit Wechselspannung beaufschlagt wird. In einem ersten niederfrequenten Bereich kann hiermit in bereits beschriebener Weise eine erste kapazitive Messgröße erfasst werden, mit der, wie bereits geschildert ist, ein Abstand zwischen dem Sensormodul, insbesondere der als Messelektrode dienenden Planarspule, und der hochohmigen Schicht ermittelt werden kann. In dem zweiten niederfrequenten Bereich, welcher höhere Frequenzen abdeckt, als der erste niederfrequente Bereich, kann eine zweite kapazitive Messgröße erfasst werden.

Untersuchungen der Anmelderin haben gezeigt, dass die erste kapazitive Messgröße in dem ersten niederfrequenten Bereich eine Amplitude aufweist, die von dem Abstand zwischen dem Sensormodul und der Oberfläche der hochohmigen Schicht abhängig ist und ihre Phasenlage unabhängig von dem ohmschen Eigenschaften der hochohmigen Schicht ist. Im Unterschied dazu weist die zweite kapazitive Messgröße in dem vergleichsweise höheren, zweiten niederfrequenten Bereich eine Phasenlage auf, die von den ohmschen Eigenschaften der hochohmigen Schicht abhängig ist. Es ist eine Erkenntnis, dass unter Berücksichtigung der Phasenlage der zweiten kapazitiven Messgröße auf einen Flächenwiderstand der hochohmigen Schicht geschlossen werden kann.

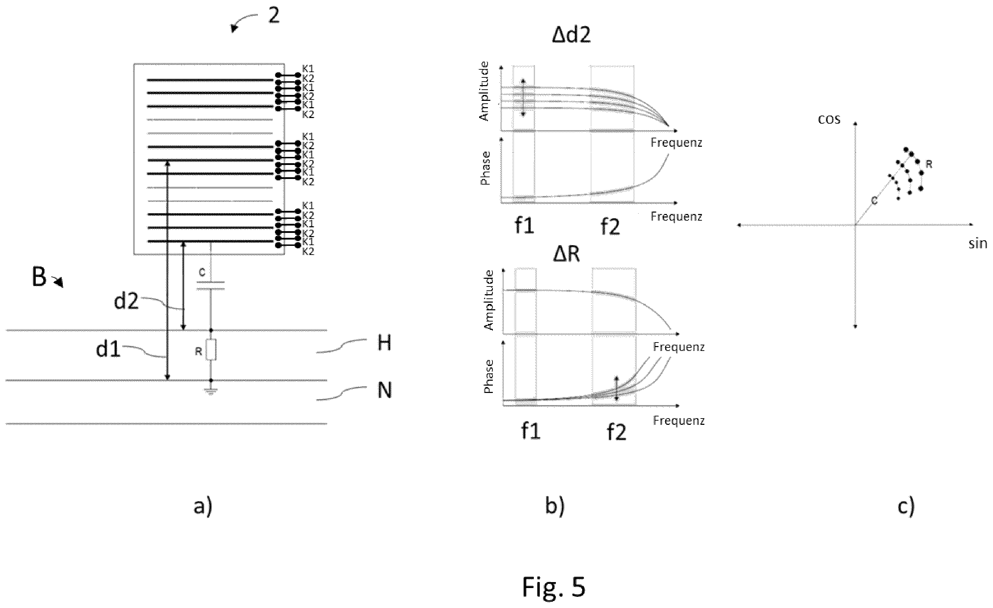

Anhang von Ansicht a) der Figur 5 ist modellhaft veranschaulicht, dass zunächst eine induktive Messgröße ermittelt werden kann, um einen Abstand d1 zwischen dem Sensormodul 2 und der Oberfläche der niederohmigen Schicht N zu ermitteln. Anschließend können in zwei unterschiedlichen niederfrequenten Bereichen zwei kapazitive Messgrößen ermittelt werden, um auf den Flächenwiderstand der hochohmigen Schicht zu schließen.

Ansicht b) der Figur 5 zeigt die Verläufe der Amplitude und Phasenlage in Abhängigkeit der Frequenz, wenn der Abstand d2 zwischen dem Sensormodul schwankt (oberes Diagramm Δd2) bzw. wenn die ohmschen Eigenschaften der hochohmigen Schicht schwanken (unteres Diagramm ΔR). Anhand des Amplitudenverlaufs in Diagramm Δd2 ist erkennbar, dass dieser in dem ersten niederfrequenten Bereich f1 von dem Abstand d2 abhängig ist. Im Vergleich dazu ist anhand des Phasenverlaufs in Diagramm ΔR erkennbar, dass eine Veränderung der ohmschen Eigenschaften in dem zweiten niederfrequenten Bereich zu einer Veränderung der Phasenlage des kapazitiven Messsignals führt. Ansicht c) der Figur 5 veranschaulicht den in Ansicht b) gezeigten Sachverhalt in einem Zeigerdiagramm.

## Patentansprüche

1. Messsystem (1) zur Charakterisierung einer mehrschichtigen Struktur mit schichtweise unterschiedlichen ohmschen Eigenschaften, insbesondere einer Batterieelektrode (B),
mit einem Sensormodul (2), einer elektrischen Schaltvorrichtung (3) und einer Messelektronik, wobei das Sensormodul (2) mehr als zwei Planarspulen (4, 5, 6, 7, 8) umfasst, die in einem Spulenstapel angeordnet sind und wobei die elektrische Schaltvorrichtung (3) mit den Planarspulen (4, 5, 6, 7, 8) kontaktiert ist und dafür eingerichtet ist, die Planarspulen (4, 5, 6, 7, 8) derart mit der Messelektronik zu verbinden, dass die Planarspulen (4, 5, 6, 7, 8) zwischen zumindest einer Messkonfiguration und einer Referenzkonfiguration umschaltbar sind, wobei
in der Messkonfiguration die Planarspulen (4, 5, 6, 7, 8) zumindest teilweise einen wahlweise induktiven oder kapazitiven Messsensor ausbilden, dessen Erfassungsbereich, sich außerhalb des Sensormoduls (2) erstreckt, um eine Eigenschaft einer niederohmigen Schicht (N) und/oder hochohmigen Schicht (H) der Struktur zu bestimmen
und in der Referenzkonfiguration die Planarspulen (4, 5, 6, 7, 8) zumindest teilweise einen wahlweise induktiven oder kapazitiven Referenzsensor ausbilden, dessen Erfassungsbereich sich im Wesentlichen innerhalb des Sensormoduls (2) erstreckt, um eine Sensormoduleigenschaft zu bestimmen.

2. Messsystem (1) nach Anspruch 1, bei dem
zur Ausbildung des induktiven Messsensors zumindest eine der Planarspulen (4, 5, 6, 7, 8) nach der Art einer Sendespule mittels der Messelektronik mit einer hochfrequenten Wechselspannung beaufschlagbar ist,
und zumindest eine der anderen Planarspulen (4, 5, 6, 7, 8), vorzugsweise zwei andere Planarspulen (4, 5, 6, 7, 8) jeweils nach der Art einer Empfangsspule dazu vorgesehen sind, um in Zusammenwirkung mit der Messelektronik eine induktive Messgröße zu erfassen und
wobei die Messelektronik eingerichtet ist, um in Abhängigkeit der induktiven Messgröße einen Abstand (d1) zwischen dem Sensormodul (2) und der niederohmigen Schicht (N) der Struktur zu bestimmen.

3. Messsystem (1) nach einem der voranstehenden Ansprüche, bei dem
zur Ausbildung des kapazitiven Messsensors zumindest eine vorzugsweise außenliegende Planarspule (4, 5, 6, 7, 8) des Spulenstapels nach der Art einer Messelektrode mittels der Messelektronik mit einer niederfrequenten Wechselspannung beaufschlagbar ist und dazu vorgesehen ist, um in Zusammenwirkung mit der Messelektronik eine kapazitive Messgröße zu erfassen und
und zumindest eine benachbarte Planarspule (4, 5, 6, 7, 8) nach der Art einer Schirmelektrode dazu vorgesehen ist, den Erfassungsbereich gegenüber dem Sensormodul (2) abzuschirmen, und
wobei die Messelektronik eingerichtet ist, um in Abhängigkeit der kapazitiven Messgröße einen Abstand (d2) zwischen dem Sensormodul (2) und der hochohmigen Schicht (H) der Struktur zu bestimmen.

4. Messsystem (1) nach den Ansprüchen 2 und 3,
bei der die Messelektronik eingerichtet ist, um in Abhängigkeit der Differenz zwischen der kapazitiven Messgröße und der induktiven Messgröße, insbesondere jeweils daraus abgeleiteter Abstände (d1 bzw. d2), eine Schichtdicke (d3) der hochohmigen Schicht zu bestimmen.

5. Messsystem (1) nach einem der voranstehenden Ansprüche, bei dem
zur Ausbildung des kapazitiven Referenzsensors zumindest eine vorzugsweise außenliegende Planarspule (4, 5, 6, 7, 8) des Spulenstapels nach der Art einer Schirmelektrode dazu vorgesehen ist, den Erfassungsbereich des kapazitiven Messsensors gegenüber einer Sensorumgebung abzuschirmen und
wobei eine dazu benachbarte Planarspule (4, 5, 6, 7, 8) nach der Art einer Referenzmesselektrode mittels der Messelektronik mit einer niederfrequenten Wechselspannung beaufschlagbar ist und dazu vorgesehen ist, um in Zusammenwirkung mit der Messelektronik eine kapazitive Referenzmessgröße zu erfassen
und die Messelektronik eingerichtet ist, um in Abhängigkeit der kapazitiven Referenzmessgröße eine Relativlage zwischen der Referenzmesselektrode und einer anderen Planarspule (4, 5, 6, 7, 8) des Spulenstapels zu bestimmen.

6. Messsystem (1) nach den Ansprüchen 4 bis 5, wobei
die Messelektronik dazu eingerichtet ist, um in Abhängigkeit der Relativlage zwischen der Referenzmesselektrode und der anderen Planarspule des Spulenstapels einen Korrekturwert zu ermitteln und die Schichtdicke (d3) der hochohmigen Schicht (H) in Abhängigkeit des Korrekturwertes zu bestimmen.

7. Messsystem (1) nach einem der voranstehenden Ansprüche, bei dem
zur Ausbildung eines induktiven Referenzsensors zumindest eine Planarspule (4, 5, 6, 7, 8) mittels der Schaltvorrichtung (2) des Spulenstapels kurzgeschlossen ist
und eine andere Planarspule (4, 5, 6, 7, 8) mittels der Messelektronik nach der Art einer Referenzsendespule mit einer hochfrequenten Wechselspannung beaufschlagbar ist und
zumindest eine zwischen der kurzgeschlossenen Planarspule (4, 5, 6, 7, 8) und der Referenzsendespule (4, 5, 6, 7, 8) liegende Planarspule (4, 5, 6, 7, 8) nach der Art einer Referenzempfangsspule dazu vorgesehen ist, um in Zusammenwirkung mit der Messelektronik eine induktive Referenzmessgröße zu erfassen
und die Messelektronik eingerichtet ist, um in Abhängigkeit der induktiven Referenzmessgröße eine Eigenschaft der zwischenliegenden Planarspule (4, 5, 6, 7, 8), insbesondere ihre Funktionstauglichkeit, zu bestimmen.

8. Messsystem (1) nach einem der voranstehenden Ansprüche, bei dem
das Sensormodul (2) entlang der Stapelachse verstellbar gelagert ist.

9. Messsystem (1) nach einem der voranstehenden Ansprüche, bei dem
das Sensormodul (2) mehr als drei Planarspulen (4, 5, 6, 7, 8) umfasst, die in dem Spulenstapel angeordnet sind und die Schaltvorrichtung (2) dazu ausgebildet ist, aus dem Spulenstapel zumindest einen Teil der Planarspulen (4, 5, 6, 7, 8) zur Ausbildung des Messsensors und/oder zur Ausbildung des Referenzsensors mit der Messelektronik zu kontaktieren.

10. Messsystem (1) nach einem der voranstehenden Ansprüche, bei dem die Schaltvorrichtung (2) dazu eingerichtet ist, mindestens zwei Planarspulen (4, 5, 6, 7, 8) des Spulenstapels elektrisch in Reihe zu schalten, insbesondere mindestens zwei Planarspulen, welche durch mindestens eine andere Planarspule voneinander getrennt sind.

11. Messsystem (1) nach einem der voranstehenden Ansprüche, bei dem
die Schaltvorrichtung einen analogen Multiplexer und/oder einen Field Programmable Analog Array umfasst.

12. Messsystem (1) nach einem der voranstehenden Ansprüche, bei dem das Sensormodul (2) nach der Art eines mehrlagigen Printed Circuit Boards ausgebildet ist, bei dem die Planarspulen (4, 5, 6, 7, 8) jeweils von einer im Wesentlichen eben verlaufenden, spiralförmigen Kupferbahn, vorzugsweis mit einer Dicke von maximal 10 Mikrometern, gebildet sind und die Planarspulen (4, 5, 6, 7, 8) paarweise mittels eines elektrisch isolierenden Trägermaterials (9) voneinander getrennt sind.

13. Messsystem (1) nach einem der voranstehenden Ansprüche, bei dem
zur Ausbildung des kapazitiven Messsensors eine vorzugsweise außenliegende Planarspule (4, 5, 6, 7, 8) des Spulenstapels nach der Art einer Messelektrode mittels der Messelektronik in zwei unterschiedlichen niederfrequenten Bereichen (f1, f2) mit Wechselspannung beaufschlagbar ist
und in Zusammenwirkung mit der Messelektronik dazu vorgesehen ist, in einem ersten niederfrequenten Bereich (f1) eine erste kapazitive Messgröße zu erfassen und in dem zweiten niederfrequenten Bereich (f2) eine zweite kapazitive Messgröße zu erfassen und wobei
die Messelektronik dazu eingerichtet ist, um in Abhängigkeit einer Amplitude der ersten Messgröße und einer Phasenlage der zweiten Messgröße einen Flächenwiderstand der hochohmigen Schicht (H) zu bestimmen und insbesondere eine Feuchte und/oder Dichte der hochohmigen Schicht (H).

14. Sensormodul (2) für ein Messsystem nach einem der voranstehenden Ansprüche,
mit mehr als zwei Planarspulen (4, 5, 6, 7, 8), die in einem Spulenstapel angeordnet sind.

15. Fertigungsanlage für eine mehrschichtige Struktur mit schichtweise unterschiedlichen ohmschen Eigenschaften, insbesondere einer Batterieelektrode (B), mit einem Messsystem (1) nach einem der voranstehenden Ansprüche.

16. Verfahren zur Charakterisierung einer mehrschichtigen Struktur mit schichtweise unterschiedlichen ohmschen Eigenschaften mit den folgenden Verfahrensschritten:
A) Bereitstellen eines Sensormoduls (2), einer Schaltvorrichtung (3) und einer Messelektronik, wobei das Sensormodul (2) mehr als zwei Planarspulen umfasst, die in einem Spulenstapel angeordnet sind und wobei die elektrische Schaltvorrichtung (3) mit den Planarspulen kontaktiert ist und dafür eingerichtet ist, die Planarspulen mit der Messelektronik zu verbinden;
B) Ansteuerung der Schaltvorrichtung (3), so dass die Planarspulen in eine Messkonfiguration gebracht werden, wobei die drei Planarspulen (4, 5, 6, 7, 8) einen induktiven und/oder kapazitiven Messsensor ausbilden, dessen Erfassungsbereich sich im Wesentlichen außerhalb des Sensormoduls erstreckt und dabei eine Eigenschaft einer niederohmigen und/oder hochohmigen Schicht der Struktur erfasst;
C) Ansteuerung der Schaltvorrichtung (3), so dass die Planarspulen in eine Referenzkonfiguration gebracht werden, wobei die drei Planarspulen einen kapazitiven und/oder induktiven Referenzsensor ausbilden, dessen Erfassungsbereich sich im Wesentlichen innerhalb des Sensormoduls erstreckt und dabei eine Eigenschaft des Sensormoduls erfasst.
